# EUROPEAN PATENT APPLICATION

(11) **EP 4 834 701 A1**
(43) Date of publication of application: **04.11.2026**
(21) Application number: 25173155.0
(22) Date of filing: 29.04.2025
(51) Int. Cl.: B61L 15/00, H04J 3/06

(54) **COMPUTER-IMPLEMENTED METHOD AND SYSTEM FOR ESTIMATING TIME SYNCHRONIZATION ERRORS IN A DISTRIBUTED SYSTEM**

(71) Applicant: Siemens Mobility GmbH, 80997 München (DE)
(72) Inventor: Braband, Jens, 38106 Braunschweig (DE)
(74) Representative: Siemens Patent Attorneys

(57) **Abstract**

The present invention relates to a computer-implemented method (300) for estimating time synchronization errors in a distributed system (200). The method comprises obtaining (302) a plurality of time measurements between a first communication device (Z) and a second communication device (A) in the distributed system (200), statistically analyzing (304) the plurality of time measurements to estimate an offset and a drift between a first time base of the first communication device (Z) and a second time base of the second communication device (A), calculating (306) upper confidence bounds for the estimated offset and the estimated drift, and determining (308) a time synchronization error estimate between the first communication device (Z) and the second communication device (A) based on the calculated upper confidence bounds. Furthermore, subjects of the present invention are a corresponding system and a corresponding computer program product.

## Description

### Technical Field

The present invention relates to a computer-implemented method for estimating time synchronization errors in a distributed system according to claim 1, a system for estimating time synchronization errors in a distributed system according to claim 10, and a computer program product according to claim 15.

### Background Art

Train control systems are complex networks of interconnected devices and software that manage railway operations to ensure safe and efficient transportation. These systems typically involve multiple components distributed across railway infrastructure and vehicles, including signaling equipment, track circuits, and on-board computers. A critical aspect of train control systems is maintaining accurate time synchronization between various components to coordinate actions and make timely decisions.

In distributed systems like train control networks, each device may have its own internal clock or time base. However, these individual time bases can drift apart over time due to factors such as temperature variations, aging of components, and inherent inaccuracies in timekeeping mechanisms. This clock drift can lead to discrepancies in the perceived timing of events across different parts of the system.

Accurate time synchronization is particularly relevant for safety-critical applications in railway systems. For example, precise timing is needed to determine train positions, manage track occupancy, and control signaling. Even small timing errors could potentially lead to incorrect decisions or delayed responses in emergency situations.

Various algorithms and protocols have been developed to address the challenge of time synchronization in distributed systems. These typically involve exchanging timestamped messages between devices to estimate and compensate for clock offsets and drifts. However, the accuracy of such synchronization methods can be affected by network delays, jitter, and asymmetric communication paths.

One common approach to time synchronization in distributed systems is Cristian's algorithm. This method involves a client device requesting the current time from a server, measuring the round-trip time of the request, and using this information to estimate the server's time with some degree of uncertainty. While relatively simple to implement, Cristian's algorithm may not provide sufficient accuracy for all railway applications, especially when network conditions are variable or unpredictable.

The document EP 3 804 180 A1 describes a method for determining a time offset between two time bases in a railway system. It involves performing successive measurement steps, where messages are exchanged between two communication devices. The method calculates auxiliary windows based on previous measurements and forms a time offset window through set formation between these auxiliary windows. This approach aims to provide a reliable estimate of the time offset with a small deterministic error.

The document US 12114276 B2 discloses a computer-assisted method for monitoring time bases of two communication devices. It uses Cristian's algorithm to calculate time offset intervals and then determines drift intervals by considering maximum and minimum possible drifts between measurement steps. The method aims to provide narrow limits for the relative drift between the time bases, which can be useful for maintaining synchronization in railway signaling systems.

It has been appreciated that a method is needed that overcomes one or more of these problems in estimating time synchronization errors in distributed systems, particularly for railway applications.

Based on the known computer-implemented methods for estimating time synchronization errors in distributed systems, the present invention addresses the challenge of providing a more accurate and statistically robust approach for estimating time synchronization errors in railway applications, particularly for safety-critical systems where precise timing is crucial.

The invention solves this problem through a method according to claim 1.

The following paragraphs elaborate on definitions for the technical terms used in the claim set. The definitions should not be understood and limiting to the disclosure, but rather as hinting on some ways of understanding implementations of the invention while not excluding interpretations not mentioned in the definitions. Accordingly, other implementations are within the scope of the following paragraphs.

### DISTRIBUTED SYSTEM

A distributed system refers to a network of interconnected computing devices that work together to achieve a common goal. In the context of this invention, the distributed system may be a railway system comprising various components such as signaling equipment, track circuits, balise transmission module, and on-board computers. These components are geographically dispersed but communicate and coordinate their actions to ensure safe and efficient railway operations. The distributed system can be implemented using various architectures, including client-server models or peer-to-peer networks. In a client-server architecture, central servers provide services to multiple client devices, while in a peer-to-peer network, each device can act as both a client and a server. The distributed system may utilize cloud computing, where resources and services are provided over the internet, allowing for scalability and flexibility. Hardware implementations of the distributed system components may include specialized embedded systems or general-purpose computers, each equipped with processors (e.g., CPUs, GPUs), memory (RAM, ROM), storage devices (SSDs, HDDs), and network interfaces (Ethernet, Wi-Fi, cellular modems, bus systems, e.g. Profibus).

### COMMUNICATION DEVICE

A communication device in this invention refers to a hardware or software component capable of sending and receiving data within the distributed system. The first communication device and second communication device may be implemented as software modules installed on servers or cloud platforms, or as dedicated hardware units. When implemented in software, these devices can be part of a larger application running on a server, which typically includes a powerful processor, large amounts of RAM, and high-capacity storage drives. Hardware implementations may involve specialized communication equipment with dedicated processors, memory, and network interfaces. These devices may use various communication protocols and technologies, including wire-bound methods like Ethernet or power-line communication, or wireless technologies such as 5G, 4G, Wi-Fi, or long-range radio. In the context of a railway system, these communication devices could be installed on trains, along tracks, or in control centers, facilitating the exchange of critical timing and operational data.

### TIME BASE

A time base refers to the reference clock or timing system used by a communication device to measure and record time. In the context of this invention, the first time base of the first communication device and the second time base of the second communication device may be implemented using hardware clock circuits or software-based timing mechanisms. Hardware implementations often use crystal oscillators or atomic clocks for precise timekeeping, while software implementations may rely on the system clock of the host computer or network time protocols. The accuracy and stability of these time bases are crucial for maintaining synchronization across the distributed system. Variations in time bases can lead to synchronization errors, which this invention aims to estimate and mitigate.

### TIME MEASUREMENTS

Time measurements in this context refer to the data points collected to assess the time difference between the first communication device and the second communication device. These measurements may include timestamps of sent and received messages, round-trip times of data packets, or other timing-related information. The process of obtaining time measurements typically involves one device sending a timestamped message to another, which then responds with its own timestamp. These measurements form the basis for the statistical analysis performed in the method. The exchange of time measurements may occur through various communication channels, depending on the specific implementation of the distributed system. Time stamped messages can also be named as time stamp telegrams.

### STATISTICAL ANALYSIS

Statistical analysis in this invention refers to the mathematical techniques applied to the collected time measurements to estimate the offset and drift between the time bases of the communication devices. This analysis may involve calculating averages, variances, and other statistical parameters from the time measurement data. The statistical analysis module may be implemented as a software component running on a server or cloud platform, processing the input data (time measurements) to produce output data (estimated offset and drift). In a hardware implementation, this could be a dedicated processing unit with specialized circuits for performing statistical calculations. The output of the statistical analysis serves as input for the subsequent steps in the method, such as calculating confidence bounds.

### OFFSET

In the context of time synchronization, offset refers to the constant time difference between the clocks of two communication devices at a given moment. The offset estimation process aims to quantify this difference, allowing for correction in time-sensitive operations. The offset calculation module may be part of the larger statistical analysis component, taking time measurement data as input and producing an estimated offset value as output. This module could be implemented in software running on a server or cloud platform, or as a hardware component within a specialized timing device.

### DRIFT

Drift refers to the gradual change in the time difference between two clocks over time, typically due to variations in oscillator frequencies or environmental factors. In this invention, drift estimation is crucial for predicting how the time synchronization between devices will change over time. The drift calculation module, like the offset module, may be part of the statistical analysis component. It processes time measurement data to estimate the rate at which the clocks are diverging. This module can be implemented in software or hardware, depending on the overall system architecture.

### UPPER CONFIDENCE BOUNDS

Upper confidence bounds are statistical measures that provide a maximum likely value for a parameter (in this case, offset and drift) with a specified level of confidence. The calculation of these bounds involves statistical techniques such as extreme value theory or central limit theorem applications. The module for calculating upper confidence bounds takes the estimated offset and drift as inputs and produces the confidence bounds as outputs. This module could be implemented as a software component on a server or cloud platform, or as a dedicated hardware unit in systems requiring real-time processing.

### TIME SYNCHRONIZATION ERROR ESTIMATE

The time synchronization error estimate is the final output of the method, representing the expected maximum discrepancy between the time bases of the two communication devices. This estimate is derived from the upper confidence bounds of the offset and drift calculations. The module for determining this estimate combines the outputs of previous steps to produce a single value or range representing the synchronization error. Like other components, this can be implemented in software or hardware, depending on the specific requirements of the distributed system.

### RAILWAY SYSTEM

In the context of this invention, a railway system refers to the comprehensive infrastructure and equipment used for rail transportation. This can include various types of rail vehicles such as trains, locomotives, trams, metros, high-speed trains, and cargo trains. The railway system also encompasses track infrastructure, signaling equipment, control centers, interlocking devices, and communication networks. The distributed system described in this invention may be implemented across different components of the railway system, with communication devices installed on rail vehicles, along tracks, in stations, and in control centers. The specific implementation may vary depending on the type of rail service (e.g., passenger vs. cargo, urban vs. long-distance) and the technological capabilities of the railway operator.

### SAFE COMPUTERS

Safe computers, as mentioned in the claims, refer to computing systems designed and certified for use in safety-critical applications, such as railway control systems. These computers typically have redundant components, fault-tolerant designs, and specialized operating systems to ensure high reliability and predictable behavior. In the context of this invention, safe computers may be used to implement the communication devices, ensuring that time synchronization and error estimation processes meet stringent safety requirements. These computers may have specialized hardware for precise timekeeping and dedicated communication interfaces for reliable data exchange in the railway environment.

### Summary of Invention

The invention as described in claim 1 offers several significant advantages over previous solutions for estimating time synchronization errors in distributed systems, particularly in the context of railway applications.

Firstly, the method's approach of obtaining a plurality of time measurements between the first and second communication devices provides a robust foundation for error estimation. By collecting multiple data points, the method can account for variations in network conditions and temporary fluctuations that might affect individual measurements. This is particularly advantageous in railway systems, where communication devices may be subject to varying environmental conditions and network quality as trains move through different areas. The plurality of time measurements may be obtained by a plurality of bidirectional or unidirectional time stamp telegrams.

The statistical analysis of these time measurements to estimate both offset and drift between the time bases of the two communication devices is a key improvement over simpler synchronization methods. By considering both offset (the constant time difference) and drift (the gradual change in time difference), the method provides a more comprehensive understanding of the time synchronization state. This is crucial in railway systems where both immediate time differences and long-term divergence can impact safety-critical operations.

The calculation of upper confidence bounds for the estimated offset and drift represents a significant advancement in the reliability of time synchronization error estimation. Unlike heuristic approaches or methods that provide point estimates, the use of confidence bounds allows for a statistically rigorous quantification of uncertainty. This is particularly valuable in safety-critical railway applications, where understanding the worst-case scenario is often as important as knowing the expected case.

The final step of determining a time synchronization error estimate based on the calculated upper confidence bounds synthesizes the previous steps into a single, actionable metric. This estimate provides railway system operators with a clear understanding of the maximum expected time discrepancy between communication devices. Such information is crucial for making informed decisions about system operations, maintenance schedules, and safety margins.

Moreover, the method's statistical approach allows for adaptation to different confidence levels, providing flexibility in balancing between conservative error estimates and system performance. This adaptability is particularly advantageous in railway systems, where different components or operations may have varying tolerance levels for timing errors.

Compared to previous solutions, which relies on heuristic estimation of timing "quality", the method in claim 1 provides a more rigorous, quantitative approach. The statistical foundation of the method allows for more precise error bounds and potentially reduces the need for overly conservative safety margins that might unnecessarily limit system performance.

Furthermore, the method's applicability to distributed systems makes it particularly suitable for modern railway networks, which often involve complex interactions between multiple onboard and trackside components. By providing a reliable means of estimating time synchronization errors across such distributed systems, the invention enhances the overall reliability and efficiency of railway operations.

In summary, the invention described in claim 1 offers a statistically robust, adaptable, and comprehensive approach to estimating time synchronization errors in distributed systems. Its advantages in providing reliable error bounds, accounting for both offset and drift, and synthesizing these into a clear error estimate make it particularly valuable for enhancing the safety and efficiency of railway systems.

### Description of Embodiments

In a further preferred embodiment of the inventive computer-implemented method, the statistical analysis comprises calculating a minimum trip time between the first communication device and the second communication device based on the plurality of time measurements. This approach offers several advantages. Firstly, by focusing on the minimum trip time, the method can establish a baseline for the fastest possible communication between devices, which is crucial for understanding the lower bounds of synchronization errors. This minimum trip time serves as a key parameter in estimating the offset between time bases. Additionally, using the plurality of time measurements to calculate this minimum trip time increases the reliability of the estimate, as it accounts for variations in network conditions over time. Alternative implementations of this feature could involve using different statistical measures, such as the median or a low percentile of trip times, to account for potential outliers in the data. Another approach could be to use a sliding window of recent measurements to adapt to changing network conditions more dynamically.

In a further preferred embodiment of the inventive computer-implemented method, calculating the minimum trip time comprises applying extreme value theory to the plurality of time measurements. The application of extreme value theory in this context provides significant benefits. It allows for a more robust estimation of the minimum trip time, especially in scenarios where the underlying distribution of trip times may not be well-understood or may have heavy tails. Extreme value theory is particularly suited for analyzing the behavior of the smallest (or largest) values in a dataset, making it ideal for estimating minimum trip times. This approach can provide more accurate confidence intervals for the minimum trip time, which is crucial for safety-critical applications in railway systems. Alternative implementations could involve using different extreme value distributions (e.g., Gumbel, Fréchet, or Weibull) depending on the characteristics of the observed data. Another approach could be to combine extreme value theory with other statistical techniques, such as bootstrapping, to further improve the robustness of the estimates.

In a further preferred embodiment of the inventive computer-implemented method, the statistical analysis comprises calculating an average drift value over the plurality of time measurements. Calculating the average drift value is advantageous as it provides a measure of the long-term divergence between the time bases of the two communication devices. This information is crucial for predicting how the synchronization error will evolve over time and for determining appropriate intervals for resynchronization. By using the plurality of time measurements, the method can obtain a more stable and reliable estimate of the drift, reducing the impact of short-term fluctuations. Alternative implementations could involve using weighted averages, where more recent measurements are given higher importance to account for potential changes in drift rates over time. Another approach could be to use regression techniques to estimate not just the average drift but also any trends or patterns in how the drift changes over time.

In a further preferred embodiment of the inventive computer-implemented method, calculating the average drift value comprises applying a central limit theorem to the plurality of time measurements. The application of the central limit theorem in this context offers several benefits. It allows for the estimation of the average drift with known statistical properties, regardless of the underlying distribution of individual drift measurements. This is particularly useful in complex distributed systems where the exact distribution of timing errors may not be known. The central limit theorem also provides a basis for constructing confidence intervals around the estimated average drift, which is crucial for understanding the uncertainty in the drift estimate. Alternative implementations could involve using different variants of the central limit theorem, such as the Lyapunov central limit theorem for cases where the variance of drift measurements might be unbounded. Another approach could be to use non-parametric bootstrap methods to estimate the distribution of the average drift, which could be particularly useful when the assumptions of the central limit theorem may not hold.

In a further preferred embodiment of the inventive computer-implemented method, calculating the upper confidence bounds comprises determining a statistical confidence level and calculating the upper confidence bounds based on the statistical confidence level. This approach provides significant flexibility and rigor to the error estimation process. By allowing for the specification of a confidence level, the method can be adapted to different safety requirements or operational contexts within the railway system. For highly critical systems, a higher confidence level can be chosen to provide more conservative error estimates. The calculation of upper confidence bounds based on this confidence level ensures that the error estimates are statistically sound and quantifiably reliable. Alternative implementations could involve using different statistical techniques for calculating confidence bounds, such as bootstrap methods or Bayesian approaches, which might be more suitable for certain types of data distributions. Another approach could be to calculate multiple confidence bounds at different confidence levels, providing a more nuanced view of the potential synchronization errors.

In a further preferred embodiment of the inventive computer-implemented method, determining the time synchronization error estimate comprises combining the calculated upper confidence bounds for the estimated offset and the estimated drift. This combination of offset and drift confidence bounds provides a comprehensive view of the potential synchronization error. It accounts for both the immediate time difference between devices (offset) and the rate at which this difference is changing (drift). By combining these factors, the method can provide a more accurate and forward-looking estimate of synchronization errors, which is particularly valuable for planning maintenance or resynchronization activities. Alternative implementations could involve different methods of combining the confidence bounds, such as using convolution techniques for a more precise representation of the combined error distribution. Another approach could be to use Monte Carlo simulations to generate a distribution of potential synchronization errors based on the confidence bounds of offset and drift.

In a further preferred embodiment of the inventive computer-implemented method, the distributed system is a railway system, and wherein the first communication device and the second communication device are components of the railway system. This application to railway systems offers significant advantages. Railway systems often require precise timing for safety-critical operations, such as signaling, train control, and collision avoidance. By applying this method to railway components, it becomes possible to maintain highly accurate time synchronization across geographically dispersed elements of the railway infrastructure. This can lead to improved safety, more efficient train scheduling, and better coordination between different subsystems. Alternative implementations could involve adapting the method for specific types of railway components, such as trackside equipment and onboard systems, taking into account their unique characteristics and constraints. Another approach could be to integrate this method with existing railway communication protocols and standards to ensure seamless adoption in current railway infrastructures.

In a further preferred embodiment of the inventive computer-implemented method, the first communication device and the second communication device are both safe computers and their drift is varying only slowly. The use of safe computers in this context provides several benefits. Safe computers, designed with redundancy and fault-tolerance in mind, offer a high degree of reliability, which is crucial for maintaining accurate time synchronization in safety-critical railway applications. The assumption of slowly varying drift for these computers allows for more stable and predictable synchronization behavior over time. This can lead to less frequent need for resynchronization and more reliable long-term timing accuracy. Alternative implementations could involve developing specialized hardware or software components for these safe computers to further enhance their timing stability. Another approach could be to implement adaptive algorithms that can detect and respond to changes in drift rates, even if they occur slowly, to maintain optimal synchronization over extended periods.

Based on known systems for estimating time synchronization errors in distributed systems, the invention further addresses the challenge of providing a system that enables accurate and statistically robust estimation of time synchronization errors in railway applications, particularly for safety-critical systems where precise timing is crucial.

The invention solves this problem through a system for estimating time synchronization errors in a distributed system according to claim 10. Preferred embodiments result from the dependent claims 11 to 14, whereby the same advantages as initially explained for the inventive computer-implemented method apply analogously.

Based on known computer program products for estimating time synchronization errors, the invention further addresses the challenge of providing a computer program product that enables accurate and statistically robust estimation of time synchronization errors in railway applications, particularly for safety-critical systems where precise timing is crucial.

The invention solves this problem through a computer program product according to claim 15. The same advantages as initially explained for the inventive computer-implemented method apply analogously.

Non-limiting and non-exhaustive examples are described with reference to the following figures. Independent of the grammatical term usage, individuals with male, female or other gender identities are included within the term.

### Brief Description of the Drawing

For better explanation of the invention, the following schematic representations show:
- FIG. 1: a block diagram of a time synchronization system for a distributed system;
- FIG. 2: a block diagram of the time synchronization system of Fig. 1;
- FIG. 3: an orthogonal side view of a railway vehicle incorporating a time synchronization system; and
- FIG. 4: a flowchart of a method for estimating time synchronization errors in a distributed system.

### Description of Examples

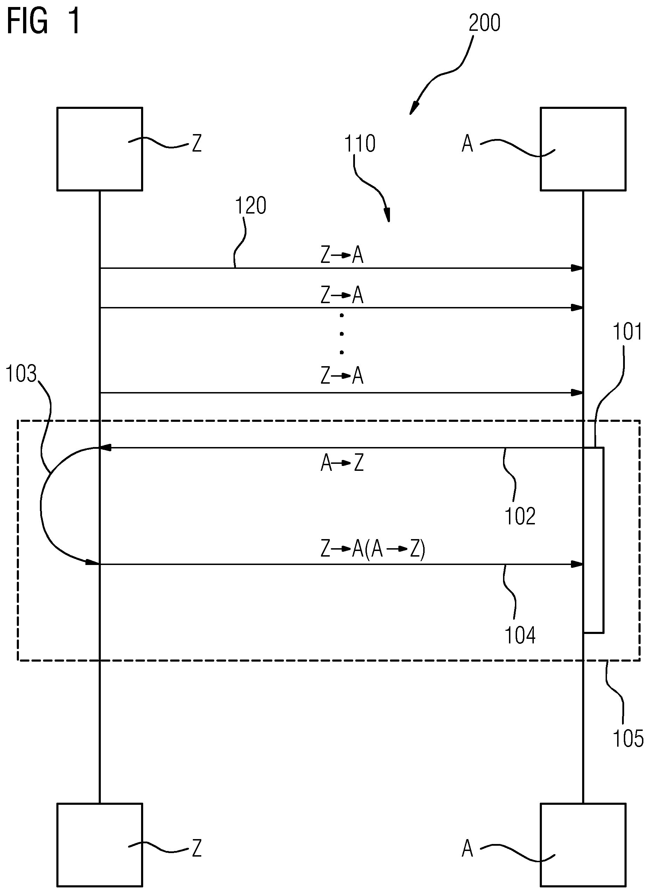

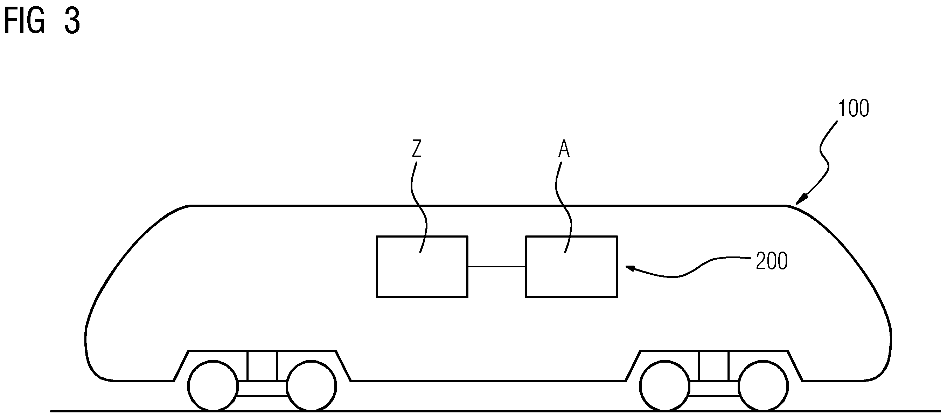

In a further preferred embodiment of the inventive computer-implemented method, a time synchronization system for a distributed system 200 is provided, as illustrated in FIG. 1. The distributed system 200 may be implemented as a railway system, such as a railway vehicle 100 as shown in Fig. 3 that will be described later. The time synchronization system comprises a first communication device Z and a second communication device A, which are components of the distributed system 200.

The first communication device Z has a first time base, while the second communication device A has a second time base. The first communication device Z and the second communication device A are configured to generate a plurality of time measurements. These time measurements are obtained between the first communication device Z and the second communication device A in the distributed system 200.

The time synchronization system utilizes various types of time stamp telegrams 110 exchanged between the first communication device Z and the second communication device A for the time measurements. These time stamp telegrams 110 include unidirectional time stamp telegrams 120 sent from the first communication device Z to the second communication device A.

Additionally, the time synchronization system implements a round-trip approach 105 for time synchronization. This approach is similar to the known Cristian's algorithm. In this approach, the second communication device A sends an initial time stamp telegram 102 to the first communication device Z. For a fast communication with minimum delay the initial time stamp telegram 102 is send via a non-safe transmission. The first communication device Z includes a receive and re-send 103 functionality that processes the received telegram and generates a return time stamp telegram 104. A receiving time of the initial time stamp telegram 103 is tracked by the first communication device Z. The initial time stamp telegram 103 and the information about the receiving time is included in the return time stamp telegram 104. The return time stamp telegram 104 is then sent back to the second communication device A. Therefore, the round-trip approach 105 uses bidirectional time stamp telegrams.

The second communication device A includes an examining device 101 that analyzes the return time stamp telegram 104 that includes the initial time stamp telegram 102.

The time synchronization system assumes a minimum physical transmission time tₘᵢₙ between the first communication device Z and the second communication device A that cannot be undercut. This minimum transmission time is considered in the time synchronization calculations to ensure accurate estimation to ensure accurate estimation of time differences between the devices.

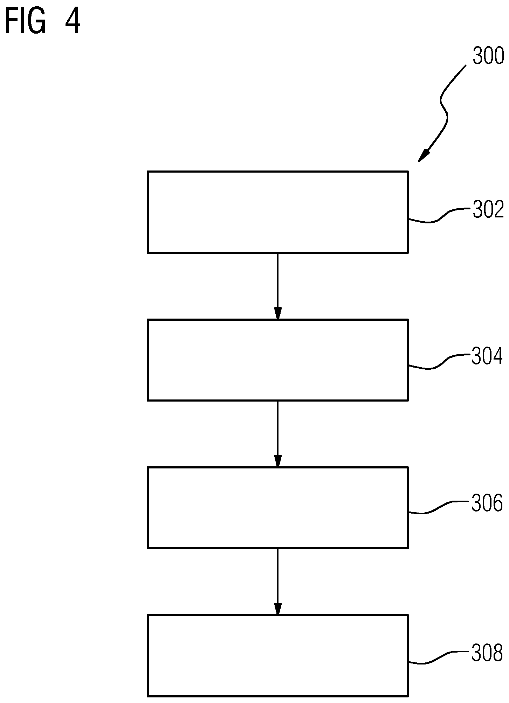

The time measurements obtained through the various time stamp telegrams 110, including the unidirectional time stamp telegrams 120 and the round-trip approach 105, form the basis for the inventive method of estimating time synchronization errors. This method, which will be explained in detail later with reference to Fig. 4, utilizes these time measurements to perform statistical analysis, calculate confidence bounds, and ultimately determine a time synchronization error estimate. By leveraging the diverse set of time measurements collected through the system illustrated in Fig. 1, the method may provide a comprehensive and robust approach to assessing and maintaining time synchronization in the distributed system 200.

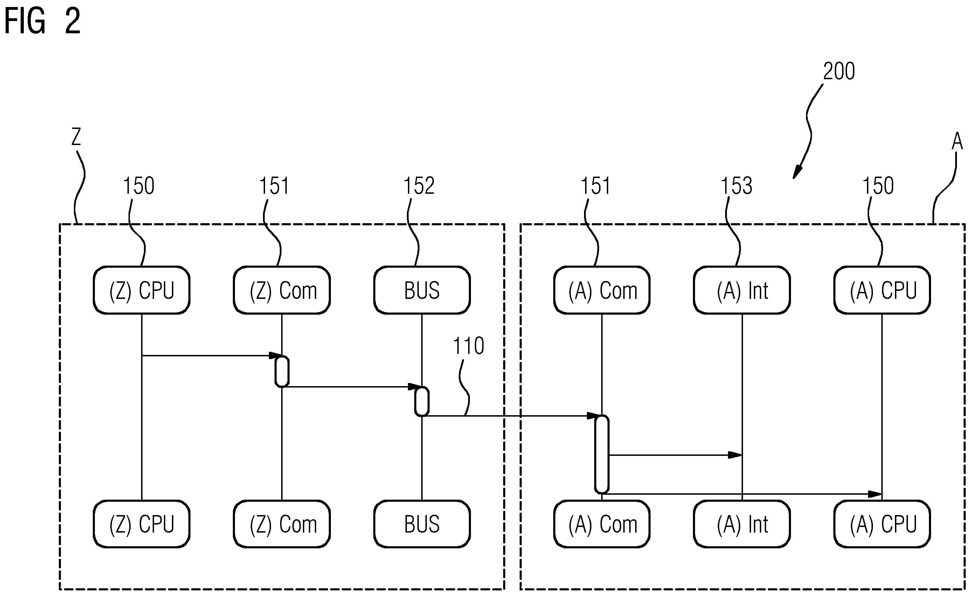

FIG. 2 illustrates a block diagram of a time synchronization system for the distributed system 200 as shown in Fig. 1. The distributed system 200 may be implemented within a railway vehicle 100 as shown in Fig. 3. The system comprises a first communication device Z and a second communication device A, which are responsible for the minimum transfer time between them.

A first communication device Z includes a CPU 150, a communication interface 151, and a network interface 152. A second communication device A includes a CPU 150, a communication interface 151, and an internal device 153. The first communication device Z and the second communication device A are configured to generate time stamp telegrams 110, which are exchanged between the devices through the distributed system 200.

The CPUs 150 in both the first communication device Z and the second communication device A are processing units that handle the generation, transmission, and analysis of the time stamp telegrams 110. These CPUs 150 may be specialized processors designed for safety-critical applications in railway systems.

The communication interfaces 151 in both devices facilitate the exchange of time stamp telegrams 110 between the first communication device Z and the second communication device A. These interfaces may use various communication protocols suitable for railway applications.

The network interface 152 in the first communication device Z enables connection to the distributed system 200, allowing for communication with other components within the railway vehicle 100. The network interface 152 can be adapted for example for Ethernet or field bus communication, e.g. Profibus. The internal device 153 in the second communication device A may be an optional component that performs additional functions specific to the second communication device A.

The first communication device Z and the second communication device A are both safe computers, designed with redundancy and fault-tolerance features to ensure reliable operation in safety-critical railway applications. These devices are typically engineered to have slowly varying drift in their time bases, which contributes to more stable and predictable synchronization behavior over extended periods.

Both the first communication device Z and the second communication device A are on-board components of the railway vehicle 100. This configuration allows for precise time synchronization between different systems within the vehicle, which can be crucial for various operational and safety functions.

The CPUs 150, which serve as the processing units for time synchronization tasks, are integral parts of both the first communication device Z and the second communication device A. These processing units handle the statistical analysis of time measurements, calculation of confidence bounds, and determination of time synchronization error estimates as described in the method.

The distributed system 200 includes the first communication device Z and the second communication device A, facilitating the exchange of time stamp telegrams 110. This system may utilize various networking technologies suitable for railway environments, ensuring reliable and timely transmission of synchronization data.

FIG. 3 illustrates an orthogonal side view of a railway vehicle 100 incorporating a time synchronization system. The railway vehicle 100 includes a first communication device Z and a second communication device A positioned within the railway vehicle 100. The first communication device Z and the second communication device A are part of a distributed system 200.

The first communication device Z and the second communication device A are positioned at different locations within the railway vehicle 100. This arrangement allows for time synchronization between various components of the railway vehicle 100, which can be important for operational and safety functions.

The distributed system 200 extends along the length of the railway vehicle 100, connecting the first communication device Z and the second communication device A. This configuration enables the devices to maintain synchronized time bases even when physically separated within the railway vehicle 100.

The time synchronization system integrated into the railway vehicle 100 can be implemented using a computer program product comprising instructions that, when executed by a computer, cause the computer to perform the method for estimating time synchronization errors. This computer program product can be installed on one or both of the first communication device Z and the second communication device A, or on a separate computing system within the railway vehicle 100.

While the described implementation focuses on time synchronization, the method can be applied to sensors in general within the railway vehicle 100. For example, the first communication device Z and the second communication device A could be connected to various sensors throughout the railway vehicle 100, such as speed sensors, temperature sensors, or pressure sensors. The time synchronization method can be used to ensure accurate timing of sensor readings, which can be important for coordinating multiple sensor inputs and making decisions based on sensor data.

FIG. 4 illustrates a method 300 for estimating time synchronization errors in a distributed system 200. The method 300 comprises several steps that are performed sequentially to analyze and estimate time synchronization between communication devices in the distributed system 200.

A step 302 of the method 300 involves obtaining a plurality of time measurements between a first communication device Z and a second communication device A in the distributed system 200. These time measurements may include timestamps of sent and received messages, round-trip times of data packets, or other timing-related information exchanged between the first communication device Z and the second communication device A.

In a step 304, the method 300 statistically analyzes the plurality of time measurements to estimate an offset and a drift between a first time base of the first communication device Z and a second time base of the second communication device A. The statistical analysis comprises calculating an average drift value over the plurality of time measurements. Calculating the average drift value comprises applying a central limit theorem to the plurality of time measurements. This approach allows for the estimation of the average drift with known statistical properties, regardless of the underlying distribution of individual drift measurements.

The statistical analysis in step 304 also comprises calculating a minimum trip time between the first communication device Z and the second communication device A based on the plurality of time measurements. Calculating the minimum trip time comprises applying extreme value theory to the plurality of time measurements. This approach provides a robust estimation of the minimum trip time, which serves as a key parameter in estimating the offset between time bases.

A step 306 of the method 300 involves calculating upper confidence bounds for the estimated offset and the estimated drift. Calculating the upper confidence bounds comprises determining a statistical confidence level and calculating the upper confidence bounds based on the statistical confidence level. This approach provides flexibility in adapting the error estimation process to different safety requirements or operational contexts within the distributed system 200.

The method 300 concludes with a step 308, which determines a time synchronization error estimate between the first communication device Z and the second communication device A based on the calculated upper confidence bounds. Determining the time synchronization error estimate comprises combining the calculated upper confidence bounds for the estimated offset and the estimated drift. This combination provides a comprehensive view of the potential synchronization error, accounting for both the immediate time difference between devices and the rate at which this difference changes.

The method 300 may use specific statistical techniques to calculate upper confidence bounds for offset and drift. These techniques involve analyzing the collected time measurements to estimate the maximum likely values for offset and drift with a specified level of confidence.

The statistical analysis may involve calculating averages, variances, and other statistical parameters from the time measurement data. For the offset estimation, the method may focus on analyzing the minimum trip times between the communication devices, potentially using extreme value theory to robustly estimate these minimums.

For drift estimation, the method may calculate average drift values over the plurality of time measurements. This could involve applying the central limit theorem to the collected measurements to estimate the average drift with known statistical properties.

The upper confidence bounds for both offset and drift would then be calculated based on these statistical analyses and a chosen confidence level. These bounds provide a statistically rigorous quantification of the maximum likely values for offset and drift, which is crucial for understanding the worst-case scenario in safety-critical railway applications.

The method 300 may be performed by one or more processing units configured to execute the steps of the method 300.

## Claims

1. A computer-implemented method (300) for estimating time synchronization errors in a distributed system (200), the method comprising:
obtaining (302) a plurality of time measurements between a first communication device (Z) and
a second communication device (A) in the distributed system (200);
statistically analyzing (304) the plurality of time measurements to estimate an offset and a drift between a first time base of the first communication device (Z) and a second time base of the second communication device (A);
calculating (306) upper confidence bounds for the estimated offset and the estimated drift; and
determining (308) a time synchronization error estimate between the first communication device (Z) and the second communication device (A) based on the calculated upper confidence bounds.

2. The computer-implemented method (300) of claim 1,
**characterized in that** the statistical analysis (304) comprises:
calculating a minimum trip time between the first communication device (Z) and the second communication device (A) based on the plurality of time measurements.

3. The computer-implemented method (300) of claim 2,
**characterized in that** calculating the minimum trip time comprises:
applying extreme value theory to the plurality of time measurements.

4. The computer-implemented method (300) of any one of claims 1 to 3,
**characterized in that** the statistical analysis (304) comprises:
calculating an average drift value over the plurality of time measurements.

5. The computer-implemented method (300) of claim 4,
**characterized in that** calculating the average drift value comprises:
applying a central limit theorem to the plurality of time measurements.

6. The computer-implemented method (300) of claim 1,
**characterized in that** calculating (306) the upper confidence bounds comprises:
determining a statistical confidence level; and
calculating the upper confidence bounds based on the statistical confidence level.

7. The computer-implemented method (300) of any one of claims 1 to 6,
**characterized in that** determining (308) the time synchronization error estimate comprises:
combining the calculated upper confidence bounds for the estimated offset and the estimated drift.

8. The computer-implemented method (300) of any one of claims 1 to 7,
**characterized in that**
the distributed system (200) is a railway system, and wherein the first communication device (Z) and the second communication device (A) are components of the railway system.

9. The computer-implemented method (300) of claim 8,
**characterized in that**
the first communication device (Z) and the second communication device (A) are both safe computers and their drift is varying only slowly.

10. A system for estimating time synchronization errors in a distributed system (200), the system comprising:
a first communication device (Z) having a first time base;
a second communication device (A) having a second time base; and
one or more processing units;
wherein the first communication device (Z) and the second communication device (A) are configured to generate a plurality of time measurements; and
wherein the one or more processing units are configured to perform the method of any one of claims 1 to 9.

11. The system of claim 10,
**characterized in that**
the distributed system (200) is a railway system, for example a railway vehicle (100).

12. The system of claim 10 or 11,
**characterized in that**
the first communication device (Z) and the second communication device (A) are both safe computers.

13. The system of any one of claims 10 to 12,
**characterized in that**
the first communication device (Z) and the second communication device (A) are both on-board components of a railway vehicle (100).

14. The system of any one of claims 10 to 13,
**characterized in that**
the one or more processing units are part of at least one of the first communication device (Z) and the second communication device (A).

15. A computer program product comprising instructions that, when executed by a computer, cause the computer to perform the method according to any one of claims 1 to 9.
